# EUROPÄISCHE PATENTSCHRIFT

(11) **EP 2 099 841 B1**
(45) Veröffentlichungstag und Bekanntmachung des Hinweises auf die Patenterteilung: **23.02.2011**
(21) Anmeldenummer: 07847918.5
(22) Anmeldetag: 06.12.2007
(51) Int. Cl.: C08G 18/32, C08G 18/40, C08G 18/42, C08G 18/44, C08G 18/48, C08G 18/63, C08G 18/66, C08G 83/00

(54) **HOCHELASTISCHE POLYURETHANWEICHSCHAUMSTOFFE**
HIGHLY ELASTIC FLEXIBLE POLYURETHANE FOAMS
MOUSSES SOUPLES DE POLYURÉTHANE À HAUTE ÉLASTICITÉ

(30) Priorität: 11.12.2006 EP 06125824
(43) Veröffentlichungstag der Anmeldung: 16.09.2009
(73) Patentinhaber: BASF SE, 67056 Ludwigshafen (DE)
(72) Erfinder: BRUCHMANN, Bernd, 67251 Freinsheim (DE); SCHÖNFELDER, Daniel, 68161 Mannheim (DE); EISENHARDT, Andrea, 49377 Vechta (DE); SCHÜTTE, Markus, 49080 Osnabrück (DE)
(86) Internationale Anmeldenummer: PCT/EP2007/063445
(87) Internationale Veröffentlichungsnummer: WO 2008/071622

(56) Entgegenhaltungen:
- US-A1- 2002 061 936
- US-A1- 2006 122 286

## Beschreibung

Die vorliegende Erfindung betrifft hochelastische Polyurethanweichschaumstoffe, erhältlich durch Vermischen von a) Polyisocyanat mit b) Polyetheralkohol und/oder Polyesteralkohol mit einer Funktionalität von 2 bis 8 und einem mittleren Äquivalentmolekulargewicht von 400 bis 3000 g/mol und/oder polymermodifiziertem Polyol, c) hyperverzweigtem Polyester c1) des Typs AₓBy, mit x mindestens 1,1 und y mindestens 2,1, und/oder hyperverzweigtem Polycarbonat c2), d) gegebenenfalls niedermolekulares Kettenverlängerungsmittel und/oder Vernetzungsmittel mit einem Molekulargewicht von kleiner 400 g/mol, wobei Kettenverlängerungsmittel 2 gegenüber Isocyanat reaktive Wasserstoffatome und Vernetzungsmittel 3 gegenüber Isocyanat reaktive Wasserstoffatome aufweisen, e) Katalysator, f) Treibmittel und g) gegebenenfalls sonstige Zusatzstoffe, wobei der Anteil der Komponente c) 0,01 bis 80 Ges.-%, bezogen auf das Gesamtgewicht der Komponenten a) bis g), beträgt. Weiter betrifft die vorliegende Erfindung ein Verfahren zu deren Herstellung sowie deren Verwendung zur Herstellung von Möbeln, Matratzen, Autositzen und anderen Polsterungen im Automobilbereich.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Polyurethanweichschaumstoffe werden überwiegend zur Herstellung von Möbeln und Matratzen sowie für Autositze und Autoteppiche eingesetzt. Wichtige Eigenschaften für diese Anwendungen sind mechanische und mechanisch-dynamische Kenngrößen, wie Härte, Elastizität, Dehnung, Zugfestigkeit, Verlustmodul und Speichermodul. In Bezug auf die Härte und die Elastizität der Polyurethan-Weichschäume verhält es sich so, dass in der Regel eine Erhöhung der Elastizität zu einer Verringerung der Härte führt.

Für die meisten Anwendungen, wie beispielsweise Polsterungen für Sitze oder Matratzen existieren feste Vorgaben für die Härte. Ein besonderes Komfortmerkmal von Polyurethanweichschaumstoffen ist aber eine möglichst hohe Elastizität.

Ein weiterer wichtiger Parameter für Polyurethanweichschaumstoffe ist deren Dichte. Dabei ist man bestrebt, die Dichte aus Kosten- und Gewichtsgründen zu verringern, um möglichst wenig Material einzusetzen. Allerdings führt eine Verringerung der Dichte bei gleichbleibender Härte zu einer Verringerung der Elastizität.

Ein weiteres Komfortmerkmal für Polyurethanschaumstoffe, insbesondere bei deren Verwendung als Automobilsitze, ist die Vibrationsdämpfung.

Aus WO 03/062297 ist bekannt, dass dendritische Polyether zur Herstellung von Polyurethanschaumstoffen eingesetzt werden können und zu einer verbesserten Schaumstabilität bei geringer Dichte und hoher Stauchhärte führen.

Aus WO 02/10247 ist es bekannt, zur Erhöhung der Härte und der Druckstabilität von Isocyanat-basierten Polymerschäumen bei gleichbleibender Dichte einen dendritischen Polyester als Additiv einzusetzen. Dabei kann es sich bei dem dendritischen Polymer um jede Art von dendritischem Polymer handeln, wobei der Gehalt an aktiven Wasserstoffatomen größer als 3,8 mmol/g, die OH-Funktionalität größer 8 und das Polymer zu zumindest 15 Gew.-%, bezogen auf das Gewicht des dendritischen Polymers, mit einem Polyetherol mit einer OH-Zahl von weniger als 40 mischbar ist.

Ein Nachteil der bekannten dendritischen und hyperverzweigten Zusätze aus dem Stand der Technik ist, dass diese Zusätze zu überwiegend geschlossenzelligen Polyurethanschaumstoffen führen. Geschlossenzellige Polyurethanschaumstoffe aber weisen eine gegenüber offenzelligen Schäumen verminderte Elastizität auf. Weiter ist die Verarbeitung von geschlossenzelligen Polyurethanweichschaumstoffen schwierig, da sich die in den Zellen enthaltenen Zellgase durch die Abkühlung des Schaums nach der Reaktion zusammenziehen, was zu einem unerwünschten Schrumpfen der Polyurethanschaumstoffe führt. Es ist zwar möglich, durch weitere Zusätze, wie beispielsweise Tenside, die Zellen des entstehenden Polyurethanschaumstoffs offen zu halten, allerdings sind diese Zusätze teuer und führen zu verschlechterten mechanischen Eigenschaften des Schaumstoffs. Weiter können diese Polyurethanschaumstoffe nur mit speziellen Isocyanaten und Additiven hergestellt werden, da ansonsten Unverträglichkeiten auftreten, die dazu führen, dass Schaumdefekte auftreten oder der Schaum nicht herstellbar ist.

Aufgabe der vorliegenden Erfindung war es daher, Polyurethanschaumstoffe zu liefern, die eine hohe Härte und dennoch eine hohe Elastizität aufweisen.

Weiter war es Aufgabe der vorliegenden Erfindung, solche Polyurethanschaumstoffe zu liefern, die einen breiten Verarbeitungsbereich zeigen und als Blockweichschaumstoffe oder Formschaumstoffe herstellbar sind.

Schließlich war es Aufgabe der Erfindung, Polyurethanschaumstoffe mit hohen Komforteigenschaften in Form von Dämpfungseigenschaften zu liefern, beispielsweise eine niedrige Transmission (Vibrationsdämpfung) bei der Resonanzfrequenz.

Polyurethanweichschaumstoff im Sinn der Erfindung umfasst alle bekannten Polyisocyanat-Polyadditionsprodukte, die Schaumstoffe gemäß DIN 7726 darstellen und eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa aufweisen. Vorzugsweise weisen Polyurethanweichschaumstoffe im Sinn der Erfindung eine Offenzelligkeit nach DIN ISO 4590 von vorzugsweise größer 85 %, besonders bevorzugt größer 90 % auf.

Zur Herstellung der erfindungsgemäßen elastischen Polyurethanweichschaumstoffe werden a) Polyisocyanat mit b) Polyetheralkohol und/oder PolyesteralKohol mit einer Funktionalität von 2 bis 8 und einem mittleren Äquivalentmalekulargewicht von 400 bis 3000 g/mol und/oder polymermodifizisrtem Polyol, c) hyperverzweigtem Polyester c1) des Typs AₓBy, mit x mindestens 1,1 und y mindestens 2,1, und/oder hyperverzweigtem Polycarbonat c2), d) gegebenenfalls niedermolekulares Kettenverlängerungsmittel und/oder Vernetzungsmittel mit einem Molekulargewicht von kleiner 400 g/mol, wobei Kettenverlängerungsmittel 2 gegenüber Isocyanat reaktive Wasserstoffatome und Vernetzungsmittel 3 gegenüber Isocyanat reaktive Wasserstoffatome aufweisen, e) Katalysator f) Treibmittel und g) gegebenenfalls sonstige Zusatzstoffe zu einer Reaktionsmischung vermischt und zum Polyurethanweichschaumstoff ausgehärtet, wobei der Anteil der Komponente c) 0,01 bis 80 Gew.-%, bezogen auf das Gesamtgewicht der Komponenten a) bis g), beträgt.

Die zur Herstellung der erfindungsgemäßen Verbundstoffe verwendete Polyisocyanatkomponente (a) umfasst alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphthylendiisocyanat (NDI) oder Mischungen daraus.

Bevorzugt wird 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), 2,4- oder 2,6-Toluylendiisocyanat (TDI) oder deren Mischungen, Isophorondiisocyanat (IPDI) oder dessen Oligomere, Hexamethylendiisocyanat (HDI) oder dessen Oligomere oder Mischungen der genannten Isocyanate verwendet. Die bevorzugt verwendeten Isocyanate können auch Uretdion-, Allophanat-, Uretonimin-, Hamstoff-, Biuret-, Isocyanurat- oder Iminooxadiazintriongruppen enthalten. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Das Polyisocyanat (a) wird alternativ in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C. mit Polyolen (a-2). zum Prepolymer umgesetzt werden. Vorgusweise werden zur Herstellung der erfindungsgemäßen Prepolymere Polyole auf Basis von Polyestern, beispielsweise ausgehend von Adipinsäure, oder Polyether, beispielsweise ausgehend von Ethylenoxid und/oder Propylenoxid, verwendet.

Polyole (a-2) sind dem Fachmann bekannt und beispielsweise beschrieben im "Kunststoffhandbuch, 7, Polyurethane", Carl Hanser Verlag, 3. Auflage 1993, Kapitel 3.1. Bevorzugt werden als Polyole (a-2) höhermolekulare Verbindungen mit mindestens zwei reaktiven Wasserstoffatomen, wie unter (b) beschrieben, eingesetzt.

In einer Ausführungsform kann zur Herstellung des Prepolymers auch hyperverzweigter Polyester c1) des Typs AₓB_{y}, mit x mindestens 1,1 und y mindestens 2,1, und/oder hyperverzweigtes Polycarbonat c2), mit gegenüber Isocyanaten reaktiven Wasserstoffatomen als Bestandteil (a2) eingesetzt werden.

Gegebenenfalls können der Umsetzung zum Polyisocyanatprepolymer noch Kettenverlängerungsmittel (a-3) zugegeben werden. Als Kettenverlängerungsmittel (a-3) für das Prepolymer sind zwei- oder dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Propylenoxid, geeignet.

Als Verbindung mit mindestens zwei aktiven Wasserstoffatomen (b) kommen Polyesteralkohole und/oder Polyetheralkohole mit einer Funktionalität von 2 bis 8, insbesondere von 2 bis 6, vorzugsweise von 2 bis 4 und einem mittleren Äquivalentmolekulargewicht im Bereich von 400 bis 3000 g/mol, vorzugsweise 1000 bis 2500 g/mol, in Betracht.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Di- oder Multimetallcyanidverbindungen, sogenannte DMC-Katalysatoren, eingesetzt werden. Es ist möglich, auch den zur Herstellung des Prepolymeren eingesetzten Polyetheralkohol in der Komponente b) einzusetzen.

Zur Herstellung von Weichschäumen und lntegralschäumen werden insbesondere zwei- und/oder dreifunktionelle Polyetheralkohole eingesetzt.

Weiter können als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Die Hydroxylzahl der Polyesteralkohole liegt vorzugsweise im Bereich zwischen 40 und 100 mg KOH/g.

Als Polyole eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Bei einem polymermodifizierten Polyol handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist.

Polymerpolyole sind beispielsweise in EP-A-250 351, DE 111 394, US 3 304 273, US 3 383 351, US 3 523 093, DE 1 152 536 und DE 1 152 537 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyol, bevorzugt Polyesterol oder Polyetherol, hergestellt. Die Seitenketten entstehen im allgemeinen durch Übertragung der Radikale von wachsenden Polymerketten auf Polyole. Das Polymer-Polyol enthält neben den Propfcopolymerisaten überwiegend die Homopolymere der Olefine, dispergiert in unverändertem Polyol.

In einer bevorzugten Ausführungsform werden als Monomere Acrylnitril, Styrol, insbesondere ausschließlich Styrol verwendet. Die Monomere werden gegebenenfalls in Gegenwart weiterer Monomerer, eines Makromers, eines Moderators und unter Einsatz eines Radikal-Initiators, meist Azo- oder Peroxidverbindungen, in einem Polyesterol oder Polyetherol als kontinuierlicher Phase polymerisiert.

Ist in der höhermolekularen Verbindung b) Polymerpolyol enthalten, liegt dies vorzugsweise zusammen mit weiteren Polyetherolen, Polyesterolen oder Mischungen aus Polyetherolen und Polyesterolen, Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew -%, oder von 11 bis 80 Gew.-% enthalten sein Besonders bevorzugt handelt es sich bei dem Polymerpolyol um Polymerpolyesterol oder Polymerpolyetherol.

Als hyperverzweigter Polyester c1) des Typs AₓB_{y}, wird im Sinn der Erfindung ein hyperverzweigter Polyester c1) des Typs AₓB_{y} eingesetzt, wobei
- x: mindestens 1,1 vorzugsweise mindestens 1,3, insbesondere mindestens 2
- y: mindestens 2,1, vorzugsweise mindestens 2.5, insbesondere mindestens 3
beträgt. Solche hyperverzweigten Polyester sind beispielsweise in WO 2005175563 offenbart.

Unter "hyperverzweigt" wird im Zusammenhang mit der vorliegenden Erfindung verstanden, dass der Verzweigungsgrad (Degree of Branching, DB), von 10 bis 100 % vorzugsweise 10 bis 99.9 %, besonders bevorzugt 20 bis 99 %, insbesondere 20 - 95 % beträgt. Damit wird auch ein Dendrimer mit einem Verzweigungsgrad von 100% umfasst. Zur Definition des "Degree of Branching" siehe H. Frey et al., Acta Polym. 1997, 48, 30.

Unter einem Polyester des Typs AₓB_{y} versteht man ein Kondensat der Moleküle A und B, wobei die Moleküle A funktionelle Gruppen funkt1) und die Moleküle B funktionelle Gruppen funkt2) aufweisen, die in der Lage sind, miteinander zu kondensieren. Dabei ist die Funktionalität der Moleküle A gleich x und die Funktionalität der Moleküle B gleich y. Beispielsweise sei ein Polyester aus Adipinsäure als Molekül A (funkt1 = COOH, x = 2) und Glycerin als Molekül B (funkt2 = OH; y = 3) genannt.

Selbstverständlich können als Einheiten A bzw. B auch Mischungen von verschiedenen Molekülen A mit gleicher funktioneller Gruppe und gleichen und / oder unterschiedlichen Funktionalitäten und verschiedenen Molekülen B mit gleicher funktioneller Gruppe und gleichen und/oder unterschiedlichen Funktionalitäten eingesetzt werden. Die Funktionalitäten x und y der Mischung ergeben sich dann durch Mittelung.

Insbesondere durch die nachfolgend beschriebenen Verfahren sind die erfindungsgemäßen hyperverzweigten Polyester c1) erhältlich, indem man
(u) eine oder mehrere Dicarbonsäuren oder eines oder mehrere Derivate derselben mit einem oder mehreren mindestens trifunktionellen Alkoholen
   oder
(v) eine oder mehrere Tricarbonsäuren oder höhere Polycarbonsäuren oder eines oder mehrere Derivate derselben mit einem oder mehreren Diolen
gegebenenfalls in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist das bevorzugte Herstellungsverfahren.

Hyperverzweigte Polyester c1) im Sinne der vorliegenden Erfindung sind vorzugsweise molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (u) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-α,ωdicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure, wobei die oben genannten Dicarbonsäuren substituiert sein können mit einem oder mehreren Resten, ausgewählt aus

C₁-C₁₀-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;

Alkylengruppen wie Methylen oder Ethyliden oder

C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbermteinsäure, 2-Phenylbernsteinsäure, Itaconsäure, 3,3-Dimethylglutarsäure.

Weiterhin gehören zu den nach Variante (u) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form ihrer Derivate einsetzen.

Unter Derivaten werden bevorzugt verstanden
- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.

Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1 ,2,5-triol, n-Hexan-1,3,6-triol, Trimethylolbutan, Trimethylolpropan oder Di-Trimethylolpropan, Trimethylolethan, Pentaerythrit Diglycerin, Triglycerin, Polyglycerine oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (v) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden
- die betreffenden Anhydride in monomerer oder auch polymerer Form,
- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono-, Di- und Triester, ferner Mono-, Di- oder Trivinylester
- sowie gemischte Methylethylester.
Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um den hyperverzweigten Polyester c1) zu erhalten.

Als Diole für Variante (v) der vorliegenden Erfindung verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H oder Gemische von zwei oder mehr Vertretern der voranstehenden Verbindungen, wobei n eine ganze Zahl ist und n = 4 bis 25. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Die Molverhältnis der Moleküle A zu Molekülen B im AₓB_{y}-Polyester bei den Varianten (u) und (v) beträgt 4:1 bis 1:4, insbesondere 2:1 bis 1:2.

Die nach Variante (u) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (u) umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um einen Alkohol handeln, welcher primäre und sekundäre Hydroxylgruppen aufweist, bevorzugtes Beispiel ist Glycerin.

Bei der Durchführung der erfindungsgemäßen Umsetzung nach Variante (u) kann man Triol oder Mischungen von Triolen einsetzen, welche bis zu 50 mol-% (bezogen auf die Polyol-Mischung) difunktionelle oder monofunktionelle Alkohole enthalten können, jedoch wird bevorzugt in Abwesenheit von Diolen und monofunktionellen Alkoholen gearbeitet.

Bei der Durchführung der erfindungsgemäßen Umsetzung nach Variante (v) kann man die Tricarbonsäuren oder deren Mischungen einsetzen, welche bis zu 50 mol-%, bezogen auf die Säuremischung, difunktionelle oder monofunktionelle Carbonsäuren enthalten können, jedoch wird bevorzugt in Abwesenheit von Mono- oder Dicarbonsäuren gearbeitet.

Das erfindungsgemäße Verfahren wird vorzugsweise lösemittelfrei oder in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgängsmaterialien, sind nicht vorteilhaft, weil bei deutlich niedrigeren Konzentrationen der Reaktionspartner die Reaktionsgeschwindigkeit deutlich nachlässt, was zu unwirtschaftlich langen Umsetzungsdauern führt.

Zur Durchführung des erfindungsgemäß bevorzugten Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, MgSO₄ und Na₂SO₄ Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Alumiumverbindungen der allgemeinen Formel Al(OR)₃ und Titanate der allgemeinen Formel Ti(OR)₄ als saure anorganische Katalysatoren einsetzbar, wobei die Reste R jeweils gleich oder verschieden sein können und unabhängig voneinander gewählt sind aus

C₁-C₁₀-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in Al(OR)₃ bzw. Ti(OR)₄ jeweils gleich und gewählt aus Isopropyl oder 2-Ethylhexyl.

Bevorzugte saure metallorganische Katalysatoren sind beispielsweise gewählt aus Dialkylzinnoxiden R₂SnO, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure lonentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Das Verfahren zur Herstellung der hyperverzweigten Polyester c1) wird unter Inertgasatmosphäre durchgeführt, das heißt beispielsweise unter Kohlendioxid, Stickstoff oder Edelgas, unter denen insbesondere Argon zu nennen ist.

Das Verfahren zur Herstellung der hyperverzweigten Polyester c1) wird bei Temperaturen von 60 bis 200 °C durchgeführt. Vorzugsweise arbeitet man bei Temperaturen von 130 bis 180 °C, insbesondere bis 150 °C oder darunter. Besonders bevorzugt sind maximale Temperaturen bis 145 °C, ganz besonders bevorzugt bis 135 °C.

Die Druckbedingungen des Verfahrens zur Herstellung der hyperverzweigten Polyester c1) sind an sich unkritisch. Man kann bei deutlich verringertem Druck arbeiten, beispielsweise bei 10 bis 500 mbar. Das Verfahren zur Herstellung der hyperverzweigten Polyester c1) kann auch bei Drücken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des erfindungsgemäßen Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion zur Herstellung der hyperverzweigten Polyester c1) lassen sich die hyperverzweigten Polyester c1) leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Weiterhin kann der hyperverzweigte Polyester c1) in Gegenwart von Enzymen oder Zersetzungsprodukten von Enzymen hergestellt gemäß DE-A 101 63163 werden.

Es gehören die zur Herstellung der hyperverzweigten Polyester umgesetzten Dicarbonsäuren nicht zu den sauren organischen Katalysatoren im Sinne der vorliegenden Erfindung.

Bevorzugt ist die Verwendung von Lipasen oder Esterasen. Gut geeignete Lipasen und Esterasen sind Candida cylindracea, Candida lipolytica, Candida rugosa, Candida antarctica, Candida utilis, Chromobacterium viscosum, Geolrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization", Seite 345-356. Immobilisierte Enzyme sind kommerziell erhältlich, beispielsweise bei Novozymes Biotech Inc., Dänemark.

Die Menge an immobilisiertem eingesetztem Enzym beträgt 0,1 bis 20 Gew.-%, insbesondere 10 bis 15 Gew.-%, bezogen auf die Masse der insgesamt eingesetzten umzusetzenden Ausgangsmaterialien.

Das Verfahren zur Herstellung des hyperverzweigten Polyesters c1) unter Verwendung eines Enzyms oder Zersetzungsprodukten von Enzymen wird bei Temperaturen über 60°C durchgeführt. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Das Verfahren zur Herstellung des hyperverzweigten Polyesters c1) unter Verwendung eines Enzyms oder Zersetzungsprodukten von Enzymen wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 5 Gew.-Teile, bezogen auf die Masse der eingesetzten umzusetzenden Ausgangsmaterialien, bevorzugt mindestens 50 Gew.-Teile und besonders bevorzugt mindestens 100 Gew.-Teile. Mengen von über 10 000 Gew.-Teile Lösemittel sind nicht erwünscht, weil bei deutlich niedrigeren Konzentrationen die Reaktionsgeschwindigkeit deutlich nachlässt, was zu unwirtschaftlichen langen Umsetzungsdauern führt.

Das Verfahren zur Herstellung des hyperverzweigten Polyesters c1) unter Verwendung eines Enzyms oder Zersetzungsprodukten von Enzymen wird bei Drücken oberhalb von 500 mbar durchgeführt. Bevorzugt ist die Umsetzung bei Atmosphärendruck oder leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des Verfahrens zur Herstellung des hyperverzweigten Polyesters c1) unter Verwendung eines Enzyms oder Zersetzungsprodukten von Enzymen beträgt üblicherweise 4 Stunden bis 6 Tage, bevorzugt 5 Stunden bis 5 Tage und besonders bevorzugt 8 Stunden bis 4 Tage.

Nach beendeter Reaktion lassen sich die hyperverzweigten Polyester c1) isolieren, beispielsweise durch Abfiltrieren des Enzyms und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Als hyperverzweigter Polyester c1) wird vorzugsweise ein hyperverzweigter Polyester c1) mit einem zahlenmittleren Molekulargewicht Mₙ von 100 bis 15000, vorzugsweise von 200 bis 12000 und insbesondere von 500 bis 10000 g/mol auf, gemessen mit GPC, kalibriert mit Polymethacrylmethacrylat (PMMA) Standard.

Vorzugsweise weist der erfindungsgemäße hyperverzweigte Polyester c1) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die Glastemperatur T_{g} des hyperverzweigten Polyesters c1) beträgt vorzugsweise von -50°C bis 140°C und insbesondere von -50 bis 100°C (mittels DSC, nach DIN 53765).

Insbesondere solche hyperverzweigten Polyester c1) sind bevorzugt, in denen mindestens eine OH- bzw. COOH-Zahl größer 0, vorzugsweise größer 0,1 und insbesondere größer 0,5 ist.

Als hyperverzweigtes Polycarbonat c2) können alle bekannten Polycarbonate, die den oben definierten Verzweigungsgrad aufweisen, eingesetzt werden. Hyperverzweigte Polycarbonate c2) weisen vorzugsweise eine OH-Zahl von 0 bis 600, besonders bevorzugt von 10 bis 550 und insbesondere von 50 bis 550 mg KOH/g Polycarbonat gemäß DIN 53240, Teil 2, auf. Solche hyperverzweigten Polycarbonate sind beispielsweise in WO 2005/075565 beschrieben.

Vorzugsweise weisen hyperverzweigte Polycarbonate c2) ein Zahlenmittel des Molekulargewichtes Mₙ von 100 bis 15000, vorzugsweise von 200 bis 12000 und insbesondere von 500 bis 10000 g/mol auf, gemessen mit GPC, geeicht mit PMMA-Standard.

Die Glasübergangstemperatur Tg von hyperverzweigten Polycarbonaten c2) beträgt bevorzugt von -80°C bis +140, besonders bevorzugt von -60 bis 120°C (gemäß DSC, DIN 53765).

Insbesondere beträgt die Viskosität bei 23°C gemäß DIN 53019 von 50 bis 200000, insbesondere von 100 bis 150000 und ganz besonders bevorzugt von 200 bis 100000 mPas.

Das hyperverzweigte Polycarbonat c2) ist vorzugsweise erhältlich durch ein Verfahren, welches mindestens die folgenden Schritte umfasst:
aa) Umsetzung mindestens eines organischen Carbonats (A) der allgemeinen Formel R[O(CO)]ₙOR mit mindestens einem aliphatischen, aliphatisch/aromatischen oder aromatischen Alkohol (B), welcher mindestens 3 OH-Gruppen aufweist, unter Eliminierung von Alkoholen ROH zu einem oder mehreren Kondensationsprodukten (K), wobei es sich bei R jeweils unabhängig voreinander um einen geradkettigen oder verzweigten aliphatischen, aromatisch/aliphatischen oder aromatischen Kohlenwasserstoffrest mit 1 bis 20 C-Atomen handelt, und wobei die Reste R auch unter Bildung eines Ringes miteinander verbunden sein können und n eine ganze Zahl zwischen 1 und 5 darstellt, oder
ab) Umsetzung von Phosgen, Diphosgen oder Triphosgen mit o.g. Alkohol (B) unter Chlorwasserstoffeliminierung
   sowie
b) intermolekulare Umsetzung der Kondensationsprodukte (K) zu einem hyperverzweigten Polycarbonat,
   wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Als Ausgangsmaterial kann Phosgen, Diphosgen oder Triphosgen eingesetzt werden, wobei organische Carbonate bevorzugt sind.

Bei den Resten R der als Ausgangsmaterial eingesetzten organischen Carbonate (A) der allgemeinen Formel RO(CO)ₙOR handelt es sich jeweils unabhängig voneinander um einen geradkettigen oder verzweigten aliphatischen, aromatisch/aliphatischen oder aromatischen Kohlenwasserstoffrest mit 1 bis 20 C-Atomen-. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Insbesondere werden einfache Carbonate der Formel RO(CO)ₙOR eingesetzt; n beträgt vorzugsweise 1 bis 3, insbesondere 1.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Düsobutylcarbonat, Dipentylcarbonat, Dihexylcarbonat, Dicyclohexylcarbonat, Diheptylcarbonat, Dioctylcarbonat, Didecylcarbonat oder Didodecylcarbonat.

Beispiele für Carbonate, bei denen n größer 1 ist, umfassen Dialkyldicarbonate, wie Di(-t-butyl)dicarbonat oder Dialkyltricarbonate wie Di(-t-butyltricarbonat).

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Düsobutylcarbonat.

Die organischen Carbonate werden mit mindestens einem aliphatischen Alkohol (B), welcher mindestens 3 OH-Gruppen aufweist oder Gemischen zweier oder mehrerer verschiedener Alkohole umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin, Polyglycerine, Bis(tri-methylolpropan), Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Bis(tri-methylolpropan) oder Zucker, wie zum Beispiel Glucose, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol, 1,2-, 1,3-und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, 1,1'-Bis(4-Hydroxyphenyl)-3,3-5-trimethylcyclohexan, Resorcin, Hydrochinon, 4,4'-Dihydroxyphenyl, Bis-(4-Bis(hydroxyphenyl)sulfid, Bis(4-Hydroxyphenyl)sulfon, Bis(hydroxymethyl)benzol, Bis(hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen B') zu den mindestens trifunktionellen Alkoholen (B) vom Fachmann je nach den gewünschten Eigenschaften des Polycarbonates festgelegt. Im Regelfalle beträgt die Menge des oder der Alkohole (B') 0 bis 50 mol-% bezüglich der Gesamtmenge aller Alkohole (B) und (B') zusammen. Bevorzugt beträgt die Menge 0 bis 45 mol-%, besonders bevorzugt 0 bis 35 mol-% und ganz besonders bevorzugt 0 bis 30 mol-%.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hyperverzweigten Polycarbonat c2) erfolgt unter Eliminierung des monofunktionellen Alkohols oder Phenols aus dem Carbonat-Molekül.

Die nach dem erfindungsgemäßen Verfahren gebildeten hyperverzweigten Polycarbonate c2) sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hyperverzweigten Polycarbonat c2) ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hyperverzweigten Polycarbonate c2) weisen zumeist nicht mehr als 500 end- oder seitenständige funktionelle Gruppen, bevorzugt nicht mehr als 100 end- oder seitenständige funktionelle Gruppen auf.

Bei der Herstellung der hyperverzweigten Polycarbonate c2) ist es notwendig, das Verhältnis von den OH-Gruppen enthaltenden Verbindungen zu Phosgen oder Carbonat so einzustellen, dass das resultierende einfachste Kondensationsprodukt, im weiteren als Kondensationsprodukt (K) bezeichnet, im Mittel entweder eine Carbonatgruppe oder Carbamoylgruppe und mehr als eine OH-Gruppe oder eine OH-Gruppe und mehr als eine Carbonatgruppe oder Carbamoylgruppe enthält. Die einfachste Struktur des Kondensationsproduktes (K) aus einem Carbonat (A) und einem Di- oder Polyalkohol (B) ergibt dabei die Anordnung XYₙ oder XₙY, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell als "fokale Gruppe" bezeichnet.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

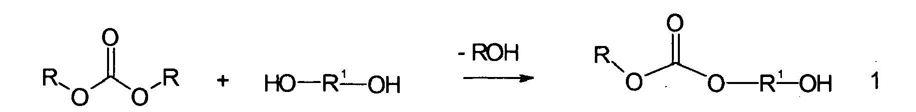

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs XY₂, veranschaulicht durch die allgemeine Formel 2. Fokale Gruppe ist hier eine Carbonatgruppe.

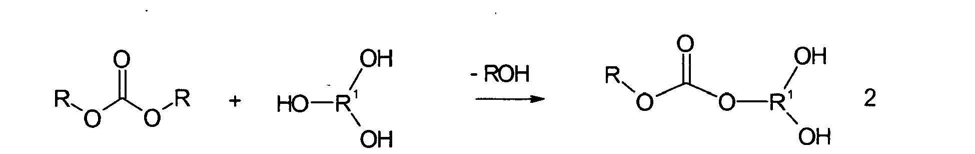

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs XY₃, veranschaulicht durch die allgemeine Formel 3. Fokale

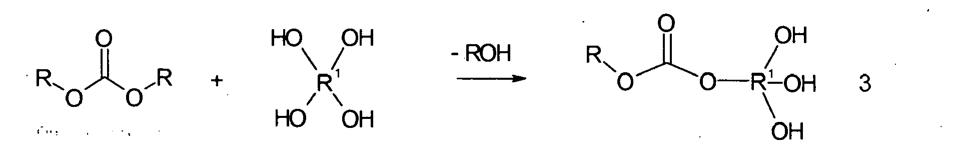

Gruppe ist hier eine Carbonatgruppe.

In den Formeln 1 bis 3 hat R die eingangs definierte Bedeutung und R¹ steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das Umsetzungsverhältnis bei molar 2:1 liegt. Hier resultiert im Mittel ein Molekül des Typs X₂Y, fokale Gruppe ist hier eine OH-Gruppe. In der

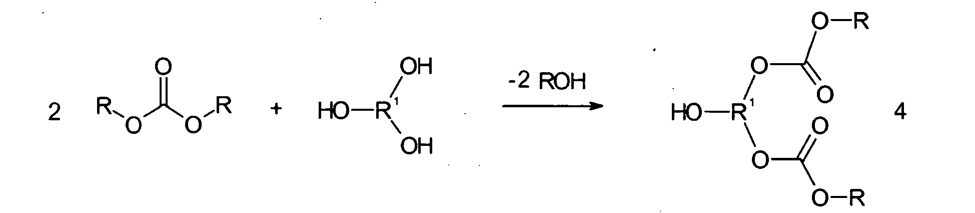

Formel 4 haben R und R¹ die gleiche Bedeutung wie in den Formeln 1 bis 3. Werden zu den Komponenten zusätzlich difunktionelle Verbindungen, z.B. ein Dicarbonat oder ein Diol gegeben, so bewirkt dies eine Verlängerung der Ketten, wie beispielsweise in der allgemeinen Formel 5 veranschaulicht. Es resultiert wieder im Mittel 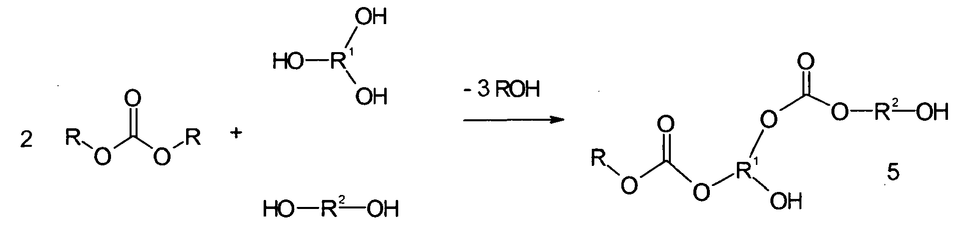 ein Molekül des Typs XY₂, fokale Gruppe ist eine Carbonatgruppe.

In Formel 5 bedeutet R² einen organischen, bevorzugt aliphatischen Rest, R und R¹ sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert. Setzt man die Ausgangsprodukte im Verhältnis 1:1 ein, wie in (II) dargestellt, so erhält man ein Molekül XY₂. Setzt man die Ausgangsprodukte im Verhältnis 2:1 ein, wie in (IV) dargestellt, so erhält man ein Molekül X₂Y. Bei einem Verhältnis zwischen 1:1 und 2:1 erhält man eine Mischung von Molekülen XY₂ und X₂Y.

Die beispielhaft in den Formeln 1 - 5-beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160 °C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenwert, solche Carbonate einzusetzen, welche bei der Umsetzung Alkohole ROH mit einem Siedepunkt von weniger als 140°C freisetzen.

Zur Beschleunigung der Reaktion können auch Katalysatoren oder Katalysatorgemische zugegeben werden. Geeignete Katalysatoren sind Verbindungen, die zum Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, dass aus der Kondensationsreaktion Polykondensationsprodukte. (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

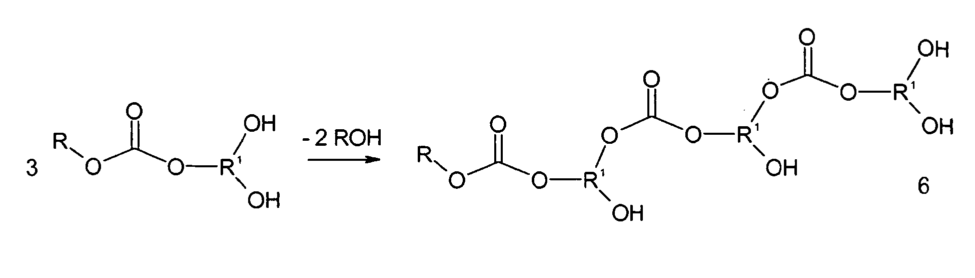

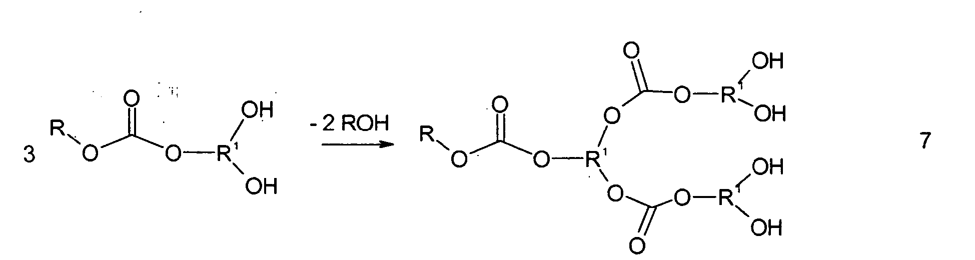

In Formel 6 und 7 sind R und R¹ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

Weiterhin kann man den Katalysator deaktivieren, bei basischen z.B. durch Zugabe von Lewissäuren oder Protonensäuren.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der hyperverzweigten Polycarbonate c2) erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Produkt gestrippt, das heißt, von niedermolekularen, flüchtigen Verbindungen befreit. Dazu kann nach Erreichen des gewünschten Umsatzgrades der Katalysator optional deaktiviert und die niedermolekularen flüchtigen Bestandteile, z.B. Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

In einer weiteren bevorzugten Ausführungsform können die erfindungsgemäßen Polyester c1) und/oder Polycarbonate c2) neben den bereits durch die Reaktion erhaltenen funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carboxyl- oder Carbonatgruppen weitere funktionelle Gruppen oder funktionelle Elemente besitzen, so erhält man ein Polyester- oder Polycarbonat-Polymer mit statistisch verteilten von den Hydroxylgruppen oder Carboxyl- oder Carbonatgruppen verschiedenen Funktionalitäten.

Derartige Effekte lassen sich zum Beispiel durch Zusatz von Verbindungen während der Polykondensation erzielen, die neben Hydroxylgruppen, Carboxyl- oder Carbonatgruppen oder Carbamoylgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Düsopropanol-amin, Tris(hydroxymethyl)aminomethan, Tris(hydroxyethyl)amino-methan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen oder Harnstoffgruppen aufweisende Polyester c1) oder Polycarbonate c2).

Durch Zugabe von Dicarbonsäuren oder deren Derivaten, wie z. B. Terephthalsäuredimethylester, oder Tricarbonsäuren oder deren Derivaten, zum Beispiel Tricarbonsäureester, oder Hydroxycarbonsäuren oder deren Derivaten, zum Beispiel deren Ester oder cyclische Ester, wie Caprolacton, lassen sich Estergruppen erzeugen.

Eine nachträgliche Funktionalisierung kann man erhalten, indem der erhaltene hyperverzweigte Polyester c1) oder das erhaltene hyperverzweigte Polycarbonat c2) in einem zusätzlichen Verfahrensschritt mit einem geeigneten Funktionalisierungsreagenz, welches mit den OH- und/oder Carboxyl- oder Carbonat-Gruppen oder Carbamoylgruppen des Polyesters c1) oder des Polycarbonates c2) reagieren kann, umsetzt.

Hydroxylgruppen enthaltende hyperverzweigte Polyester c1) oder Polycarbonate c2) können zum Beispiel durch Zugabe von Säuregruppen- oder lsocyanatgruppen enthaltenden Molekülen modifiziert werden. Beispielsweise lassen sich Säuregruppen enthaltende Polyester c1) oder Polycarbonate c2) durch Umsetzung mit Anhydridgruppen enthaltenden Verbindungen erhalten.

Weiterhin können Hydroxylgruppen enthaltende hyperverzweite Polyester c1) oder Polycarbonate c2) auch durch Umsetzung mit Alkylenoxiden, zum Beispiel Ethylenoxid, Propylenoxid oder Butylenoxid, in hyperverzweigte Polyester-Polyetherole oder Polycarbonat-Polyetherpolyole überführt werden.

Der Anteil an Komponente c) beträgt 0,01 bis 80, bevorzugt 0,5 bis 50 und insbesondere 0,7 bis 30 Gew.-%, bezogen auf das Gesamtgewicht der Komponenten a) bis g). Dabei ist es gegebenenfalls möglich, dass auch der gesamte Gehalt an hyperverzweigtem Polymer zur Herstellung von Polyisocyanatprepolymeren eingesetzt wird. Bevorzugt wird dabei die Komponente c) einem Diphenylmethandiisocyanat oder dessen Derivaten und/oder Toluoldiisocyanat oder dessen Derivaten zugegeben.

Besonders bevorzugt ist ein erfindungsgemäßer Polyurethanweichschaum, bei dem Polyisocyanat a) Diphenylmethandiisocyanat oder dessen Derivate und Komponente c) hyperverzweigtes Polycarbonat c2) enthält, insbesondere ein erfindungsgemäßer Polyurothanweichschaum, bei dem als Polyisocyanat a) ausschließlich Diphenylmethandüsocyanat oder dessen Derivate und als Komponente c) hyperverzweigtes Polycarbonat c2) eingesetzt wird.

Als Kettenverlägerungsmittel und/oder Vernetzungsmittel (d) werden Substanzen mit einem Molekulargewicht von kleiner 400 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Vorzugsweise werden Diole und/oder Triote mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Trioten als Startermoleküle. Besonders bevorzugt werden als Kettenverlängerer (d) Monoethylenglycol, 1,4-Butandiol und/oder Glycerin eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.%, bezogen auf das Gewicht der Komponenten (b) und (d) zum Einsatz.

Als Katalysatoren (e) zur Herstellung der Polyurethanschaumstoffe werden bevorzugt Verbindungen verwendet, welche die Reaktion der Hydroxylgruppen enthaltenden Verbindungen der Komponente (b), (c) und gegebenenfalls (d) mit den Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N'.N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-hamstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-etyhlhexanoat und Bismutoctanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Handelt es sich bei der Komponente (b) um einen Ester, werden vorzugsweise ausschließlich Aminkatalysatoren eingesetzt.

Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Ferner sind bei der Herstellung von Polyurethanschaumstoffen Treibmittel (f) zugegen. Als Treibmittel (f) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Merstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane^{®} 365 mfc, oder Gase, wie Kohlendioxid. In einer bevorzugten Ausführungsform wird als Treibmittel eine Mischung dieser Treibmittel, enthaltend Wasser, eingesetzt. Wird kein Wasser als Treibmittel eingesetzt, werden vorzugsweise ausschließlich physikalische Treibmittel verwendet.

Der Gehalt an physikalischen Treibmitteln (f) liegt in einer bevorzugten Ausführungsform im Bereich zwischen 1 und 20 Gew.-%, insbesondere 5 und 20 Gew.-%, die Menge an Wasser vorzugsweise im Bereich zwischen 0,5 und 10 Gew.-%, insbesondere 1 und 5 Gew.-%. Bevorzugt wird Kohlendioxid als Treibmittel (f) eingesetzt, das entweder online, das heißt direkt am Mischkopf, oder über den Vorratstank bei Batch-Fahrweise zugeführt wird.

Als Hilfsmittel und/oder Zusatzstoffe (g) werden beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteristatisch wirkende Substanzen eingesetzt.

Bei der technischen Herstellung von Polyurethan-Schaumstoffen ist es üblich, die Polyetheralkohol und/oder Polyesteralkohol mit einer Funktionalität von 2 bis 8 und einem mittleren Äquivalentmolekulargewicht von 400 bis 3000 g/mol und/oder polymermodifiziertem Polyol b) und ein oder mehrere der Einsatzstoffe c) bis g), soweit nicht bereits zur Herstellung von Polyisocyanatprepolymeren verwendet, vor der Umsetzung mit dem Polyisocyanat a) zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate mit den Verbindungen mit mindestens zwei aktiven Wasserstoffatomen im Beisein der genannten Treibmittel, Katalysatoren und Hilfs- und/oder Zusatzstoffe (Polyolkomponente) zur Reaktion gebracht.

Im allgemeinen werden bei der Herstellung des erfindungsgemäßen Verbundmaterials die Polyisocyanate (a), Polyetheralkohol und/oder Polyesteralkohol mit einer Funktianalität von 2 bis 8 und einem mittleren Äquivalentmolekulargewicht von 400 bis 3000 g/mol und/oder polymermodifiziertes Polyol (b), hyperverzweigter Polyester c1) des Typs AₓB_{y}, mit x mindestens 1,1 und y mindestens 2,1, und/oder hyperverzweigtes Polycarbonat c2), und gegebenenfalls die Kettenverlängerungs- und/oder Vernetzungsmittel (d) mit einem Molekulargewicht von kleiner 400 g/mol, wobei Kettenverlängerungsmittel 2 gegenüber Isocyanat reaktive Wasserstoffatome und Vernetzungsmittel 3 gegenüber Isocyanat reaktive Wasserstoffatome aufweisen in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c) und gegebenenfalls (d) und (f) 0,7 bis 1,25:1, vorzugsweise 0,80 bis 1,15:1 beträgt, wobei der Anteil der Komponente c) 0,01 bis 80 Gew.-%, bezogen auf das Gesamtgewicht der Komponenten a) bis g), beträgt. Ein Verhältnis von 1:1 entspricht dabei einem Isocyanatindex von 100.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu verfahren, bei dem, wie oben ausgeführt, eine Polyolkomponente hergestellt und mit Polyisocyanat a) verschäumt wird. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C.

Erfindungsgemäße Polyurethanweichschäume werden vorzugsweise als Polsterungen für Möbel und Matratzen, orthopädische Produkte, wie beispielsweise Kissen, für Polsterungen im Automobilbereich, wie Armlehnen, Kopfstützen und insbesondere Autositze verwendet und weisen bei gleichbleibenden Härten verbesserte Werte für die Elastizität auf. Weiter weisen erfindungsgemäße Polyurethanweichschaumstoffe vor allem bei Verwendung von Polycarbonaten als hyperverzweigtes Polymer c) besonders vorteilhafte Brandeigenschaften auf.

Ein weiterer Vorteil der erfindungsgemäßen Polyurethane ist ein ausgeprägtes Dämpfungsverhalten. Dabei wird das Dämpfungsverhalten bestimmt, indem der Probeschaumstoff mit einer Dicke von 10 cm bei Normklima mit 50 kg in einem Frequenzbereich von 2-20 Hz mit einer Anregungsamplitude von +/- 1 mm angeregt wird. Das Verhältnis der gemessenen Auslenkung der Schaumstoffoberseite zu der Anregung, jeweils in mm, ergibt die Transmission. Die Frequenz, bei der maximale Auslenkung gemessen wird, wird als Resonanzfrequenz bezeichnet. Da der menschliche Körper in einem Frequenzbereich von 2-20 Hz besonders sensibel auf Schwingungen reagiert, sollte in diesem Bereich die Transmission, besonders im Bereich der Resonanzfrequenz, möglichst gering sein.

Im Folgenden soll die Erfindung im Rahmen von Beispielen für den Einsatz von hyperverzweigten Polyolen in Weichschäumen verdeutlicht werden.

Im Rahmen der Beispiele wurde die Rohdichte gemäß DIN EN ISO 845 bestimmt. Weiter wurde die Stauchhärte gemäß DIN EN ISO 3386 und die Rückprallelastizität gemäß DIN 53573 bestimmt.

Im Rahmen der Beispiele wurden folgende Einsatzstoffe verwendet:
- Polyol 1:: Graftpolyol auf der Basis von Styrol-Acrylnitril mit einem Feststoffgehalt von 45 % in einem Polyoxypropylen-Polyoxyethylen-Polyol mit einer OH-Zahl von 20 mg KOH/g und einer mittleren Funktionalität von 2,7.
- Polyol 2:: Polyoxypropylen-Polyoxyethylen-Polyol mit einer OH-Zahl von 35 mg KOH/g und einer mittleren Funktionalität von 2,7.
- Polyol 3:: Polyoxypropylen-Polyoxyethylen-Polyol mit einer OH-Zahl von 42 mg KOH/g und einer mittleren Funktionalität von 2,6.
- Polyol 4:: Polyoxyethylen-Polyol mit einer OH-Zahl von 525 mg KOH/g und einer mittle- ren Funktionalität von 3.
- DEOA:: Diethanolamin
- HB Polyol 1:: Hyperverzweigtes Polycarbonat aus Diethylcarbonat, Polypropylenoxyd- Triol und teilweise Benzoesäure-Cap mit einer OH-Zahl von 75 mg KOH/g.
- HB Polyol 2:: Hyperverzweigter Polyester aus Adipinsäure und Glycerin mit einer OH- Zahl von 360 mg KOH/g.
- HB Polyol 3:: Hyperverzweigtes Polycarbonat aus Diethylcarbonat und Polyoxyethy- len-Triol mit einer OH-Zahl von 266 mg KOH/g.
- HB Polyol 4:: Boltorn P500, Fa. Perstorp, dendritisches Polyesterpolyol auf Basis 2,2-Dimethylol-propionsäure mit einer OH-Zahl von 602 mg KOH/g.
- Katalyse:: Amin-Katalyse
- Isocyanat 1:: Toluylendiisocyanat (Lupranat T 80, BASF AG) mit einem NCO-Gehalt von 48,3 Gew.-%.
- Isocyanat 2:: Mischung aus 20 Gew-% Polymerdiphenylmethandüsocyanat (Lupranat M20), 45 Gew.-% 4,4'-Diphenylmethandiisocyanat und 35 Gew.-% 2,4- Diphenylmethandiisocyanat mit einem mittleren NCO-Gehalt von 33,3 Gew.-%.

Dabei wurden die hyperverzweigten Polyole HB Polyol 1, HB Polyol 2 und HB Polyol 3 wie folgt erhalten:

### HB Polyol 1:

In einem 4-I-Kolben, der mit Rührer, Innenthermometer und Rückflußkühler versehen war, wurde Diethylcarbonat (879 g, 7,44 mol) mit einem Triol (2000 g, 4,65 mol), das zuvor durch Propoxylierung von Trimethylolpropan mit 5,2 Propylenoxideinheiten gewonnen wurde, in Gegenwart von Kaliumhydroxid (0,4 g) bei Normaldruck unter leichter Stickstoffbegasung bei ca. 140°C miteinander umgesetzt. Hierbei hat sich im Laufe der Reaktion in der Reaktionsmischung stetig Ethanol als Kondensationsnebenprodukt gebildet, so dass sich der Siedepunkt der Reaktionsmischung innerhalb von 1,5 h bis auf 115 °C absenkte. Anschließend wurde die Mischung kurzzeitig bis auf unter 100 °C abgekühlt und Ethylbenzoat hinzugegeben (233 g, 1,55 mol). Danach wurde die Reaktionsmischung wiederum bei ca. 115 °C unter Rückfluss erhitzt, wobei sich - wie zuvor beschrieben - die Siedetemperatur im Laufe der Reaktion weiter verringerte. Nach weiteren 4 h Reaktionszeit hat die Siedetemperatur ca. 105 °C betragen und blieb hierbei konstant. Anschließend wurde der Rückflusskühler durch eine Destillationsvorrichtung, bestehend aus einer 20 cm Füllkörperkolonne, einem absteigendem Kühler und einer Vorlage, ausgetauscht und das bei der Reaktion gebildete Ethanol kontinuierlich abdestilliert. Nachdem insgesamt etwa 665 g Ethanol entfernt wurden, was einem Gesamtumsatz bezüglich Ethanol von ca. 90 % entspricht, wurde die Reaktionsmischung auf 100 °C abgekühlt und zur Neutralisation des Kaliumhydroxids 85 %-ige Phosphorsäure (0,4 g) hinzugegeben bis sich ein pH-Wert von weniger als 7 eingestellt hat. Die Mischung wurde 1 h lang bei 100 °C gerührt. Anschließend wurde die Reaktionsapparatur mit einem Gaseinleitungsrohr versehen und die Mischung ca. 3 h mit Stickstoff gestrippt. Hierbei wurden weitere Reste von Ethanol bzw. niedermolekulare Komponenten (insg. ca. 25 g) entfernt.

Anschließend wurde das Produkt abgekühlt und analysiert.

Die OH-Zahl wurde zu 75 mg KOH/g bestimmt, die Molgewichte wurden mittels GPC (Eluent = Dimethylacetamid (DMAC), Kalibrierung = PMMA) zu Mₙ = 1800 g/mol, M_{w} = 15400 g/mol bestimmt.

### HB Polyol 2:

In einem 2-I-Kolben, der mit Rührer, Innenthermomether, einer Kapillare zum Einleiten von Stickstoff und einem absteigenden Kühler mit Vakuumanschluß versehen war, wurden Adipinsäure (877 g, 6,0 mol) mit Glycerin (461 g, 5,0 mol) in Gegenwart von Di-n-butylzinnoxid (Fascat®) (3 g) bei Normaldruck unter leichter Stickstoffbegasung bei 140°C miteinander umgesetzt, wobei entstehendes Kondensationswasser abgeschieden wurde. Nach 4 h Reaktionszeit wurde der Druck auf 50 mbar verringert und weiter kondensiert, bis eine Säurezahl von 100 mg KOH/g erreicht war. Dann wurde mittels Stickstoffeinleitung Normaldruck hergestellt, 382 g Glycerin zugesetzt, und nochmals bei 140°C und vermindertem Druck polykondensiert, bis eine Säurezahl von 19 mg KOH/g erreicht war. Anschließend wurde das Produkt abgekühlt und analysiert. Die Viskosität betrug 5000 mPas bei 75°C, die OH-Zahl wurde mit 360 mg KOH/g bestimmt.

### H B Polyol 3:

In einem 4-I-Kolben, der mit Rührer, Innenthermometer und Rückflußkühler versehen war, wurde Diethylcarbonat (762 g, 6,45 mol) mit einem Triol (2000 g, 6,45 mol), das zuvor durch Ethoxylierung von Glycerin mit 4,9 Ethylenoxideinheiten gewonnen wurde, in Gegenwart von Kaliumhydroxid (0,4 g) bei Normaldruck unter leichter Stickstoffbegasung bei ca. 120°C miteinander umgesetzt. Hierbei hat sich im Laufe der Reaktion in der Reaktionsmischung stetig Ethanol als Kondensationsnebenprodukt gebildet, so dass sich der Siedepunkt der Reaktionsmischung innerhalb von 1 h bis auf 105 °C absenkte. Nachdem die Siedetemperatur konstant blieb, wurde der Rückflusskühler durch eine Destillationsvorrichtung, bestehend aus einer 20 cm Füllkörperkolonne, einem absteigendem Kühler und einer Vorlage, ausgetauscht und das bei der Reaktion gebildete Ethanol kontinuierlich abdestilliert. Nachdem insgesamt etwa 480 g Ethanol entfernt wurden, was einem Gesamtumsatz bezüglich Ethanol von ca. 80 % entspricht, wurde die Reaktionsmischung auf 100 °C abgekühlt und zur Neutralisation des Kaliumhydroxids 85 %-ige Phosphorsäure (1,2 g) hinzugegeben bis sich ein pH-Wert von weniger als 7 eingestellt hat. Die Mischung wurde 1 h lang bei 100 °C gerührt. Anschließend wurde die Reaktionsapparatur mit einem Gaseinleitungsrohr versehen und die Mischung ca. 3 h mit Stickstoff gestrippt. Hierbei wurden weitere Reste von Ethanol bzw. niedermolekulare Komponenten (insg. ca. 8 g) entfernt.

Anschließend wurde das Produkt abgekühlt und analysiert.

Die OH-Zahl wurde zu 266 mg KOH/g bestimmt, die Molgewichte wurden mittels GPC (Eluent = DMAC, Kalibrierung = PMMA) zu Mₙ = 1500 g/mol, M_{w} = 2800 g/mol bestimmt.

Gemäß Tabelle 1 wurden TDI-Blockschaumstoffe hergestellt und auf ihre Härte und Elastizität untersucht.

MT steht für Masseteile, mit Index ist der Isocyanatindex angegeben.

Als Brandtest wurde der Test nach Cal TB 117 A , ein Brandtest für Möbel/Matratzen durchgeführt.

**Tabelle 1:**

| Formulierung | | Vergleichsbeispiel 1 | Beispiel 1 | Vergleichsbeispiel 2 | Beispiel 2 | Vergleichsbeispiel 3 |
|---|---|---|---|---|---|---|
| Polyol 1 | MT | 33,3 | 16,3 | 16,3 | 33,3 | 33,3 |
| Polyol 2 | MT | 66,7 | 66,7 | 66,7 | 66,7 | 66,7 |
| Diethanolamin | MT | 1,49 | 1,49 | 1,49 | 1,49 | 1,49 |
| HB Polyol 1 | MT | - | 17 | - | - | - |
| HB Polyol 2 | MT | - | - | - | 4 | - |
| HB Polyol 4 | | - | - | 17 | - | 4 |
| Wasser | MT | 1,63 | 1,63 | 1,63 | 1,63 | 1,63 |
| Stabilisator | MT | 0,5 | 0,5 | 0,5 | 0,5 | 0,5 |
| Katalyse | MT | 0,42 | 0,42 | 0,42 | 0,42 | 0,42 |
| Isocyanat 1 | Index | 105 | 105 | 105 | 105 | 105 |
| Eigenschaften | | | | | | |
| Rohdichte, Kern | kg/m³ | 39,2 | 39,3 | kein | 40,8 | 37,6 |
| Stauchhärte 40 % | kPa | 4,4 | 5,2 | stabiler | 4,7 | 5,1 |
| Rückprallelastizität | % | 58 | 64 | Schaum | 63 | 42 |
| Brandtest | | nicht best. | - | - | bestanden | - |

Aus Tabelle 1 ist zu erkennen, dass durch Zusatz von erfindungsgemäßen Polyestern als auch von erfindungsgemäßen Polycarbonaten sowohl eine Verbesserung der Stauchhärte bei 40 % Kompression als auch der Rückprallelastizität erreicht wird. Dagegen führt der Einsatz von HB Polyol 4 bei geringeren Konzentrationen sogar zu einer Verschlechterung der Rückprallelastizität gegenüber dem Vergleichsbeispiel 1 ohne Zugabe von hyperverzweigtem Polymer, bei höherer Konzentration an HB Polyol 4 wird kein stabiler Schaum erhalten. Der Brandtest wird von einem Schaum nach Beispiel 2 bestanden, während ein Schaum ohne hyperverzweigtes Polyol gemäß Vergleichsbeispiel 1 diesen nicht besteht.

Gemäß Tabelle 2 wurden MDI-Formschaumstoffe hergestellt und auf ihre Härte und Elastizität untersucht.

**Tabelle 2:**

| Formulierung | | Vergleichsbeispiel 4 | Beispiel 3 | Beispiel 4 | Vergleichsbeispiel 5 |
|---|---|---|---|---|---|
| Polyol 2 | MT | 76,05 | 72,05 | 72,05 | 72,05 |
| Polyol 1 | MT | 15 | 15 | 15 | 15 |
| Polyol 3 | MT | 4 | 4 | 4 | 4 |
| DEOA | MT | 0,85 | 0,85 | 0,85 | 0,85 |
| HB Polyol 3 | MT | - | 4 | - | - |
| HB Polyol 2 | MT | - | - | 4 | - |
| HB Polyol 4 | | - | - | - | 4 |
| Wasser | MT | 2,6 | 2,6 | 2,6 | 2,6 |
| Stabilisator | MT | 0,5 | 0,5 | 0,5 | 0,5 |
| Katalysatorsystem 2 | MT | 1,0 | 1,0 | 1,0 | 1,0 |
| Isocyanat 2 | | | | | |
| | Index | 95 | 95 | 95 | 95 |
| Eigenschaften | | | | | |
| Rohdichte, Kern | kg/m³ | 60,0 | 59,5 | 60,6 | 60,9 |
| Stauchhärte 40 % | kPa | 5,4 | 6,3 | 7,3 | 6,5 |
| Rückprallelastizität | % | 64 | 66 | 64 | 64 |
| Oberflächenbeschaffenheit | | + | + | + | - |

Die Oberflächenbeschaffenheit wurde mit bloßem Auge begutachtet. + steht dabei für eine fehlerfreie Oberfläche, - für eine Oberfläche mit Defekten

Dabei führt der Einsatz von hyperverzweigtem Polymer zu einer Verbesserung der Stauchhärte bei konstanter Rückprallelastizität, wobei aber bei Verwendung von HB Polyol 4 Oberflächendefekte auftreten. Eine besonders ausgeprägte Härteverbesserung erfolgt durch Zusatz von HB Polyol 2.

Gemäß Tabelle 3 wurden MDI-Formschaumstoffe hergestellt und auf ihre Dämpfungseigenschaften untersucht. Hier wurde als Vergleich Polyol 4 eingesetzt, dass üblicherweise zur Elastizitätsverbesserung verwendet wird.

**Tabelle 3**

| Formulierung | | Vergleichs-Beispiel 6 | Beispiel 5 |
|---|---|---|---|
| Polyol 2 | MT | 66,05 | 76,05 |
| Polyol 1 | MT | 15 | 7,5 |
| Polyol 3 | MT | 4,00 | 4,00 |
| DEOA | MT | 0,85 | 0,85 |
| Polyol 4 | MT | 10 | - |
| HB Polyol 1 | MT | - | 7,5 |
| | | | |
| Wasser | MT | 2,6 | 2,6 |
| Stabilisator | MT | 0,5 | 0,5 |
| Katalysatorsystem 2 | MT | 1,0 | 1,0 |
| Isocyanat 2 | Index | 95 | 95 |
| Eigenschaften | | | |
| Rohdichte, Kern | kg/m³ | 60,6 | 61,2 |
| Stauchhärte 40 % | kPa | 5,9 | 5,7 |
| Rückprallelastizität | % | 64 | 61 |
| Resonanzfrequenz | Hz | 4,44 | 4,36 |
| Transmission | | 6,24 | 4,74 |

Erfindungsgemäße Formschaumstoffe zeigen wesentlich geringere Werte für die Transmission bei gleicher Resonanzfrequenz und damit eine verbesserte Dämpfung.

## Patentansprüche

1. Polyurethanweichschaumstoff, erhältlich durch Vermischen von
a) Polyisocyanat mit
b) mindestens einem Polyetheralkohol und/oder Polyesteralkohol mit einer Funktionalität von 2 bis 8 und einem mittleren Äquivalentmolekulargewicht von 400 bis 3000 g/mol und/oder polymermodifiziertem Polyol,
c) einem hyperverzweigten Polyester c1) des Typs AₓB_{y}, mit x mindestens 1,1 und y mindestens 2,1, und/oder hyperverzweigtem Polycarbonat c2)
d) gegebenenfalls niedermolekulares Kettenverlängerungsmittel und/oder Vernetzungsmittel mit einem Molekulargewicht von kleiner 400 g/mol, wobei Kettenveriängerungsmittel 2 gegenüber Isocyanat reaktive Wasserstoffatome und Vernetzungsmittel 3 gegenüber lsocyanat reaktive Wasserstoffatome aufweisen,
e) Katalysator
f) Treibmittel und
g) gegebenenfalls sonstige Zusatzstoffe,
wobei der Anteil der Komponente c) 0,01 bis 80 Gew.-%, bezogen auf das Gesamtgewicht der Komponenten a) bis g), beträgt.

2. Polyurethanweichschaumstoff nach Anspruch 1, **dadurch gekennzeichnet, dass** die Komponente b) ein polymermodifiziertes Polyol umfasst.

3. Polyurethanweichschaumstoff nach Anspruch 2, **dadurch gekennzeichnet, dass** das polymermodifizierte Polyol ein Pfropf-Polyetherol oder ein Pfropf-Polyesterol mit einem Gehalt an thermoplastischem Polymeren von 5 bis 60 Ges.-%, bezogen auf das Gesamtgewicht des polymermodifizierten Polyols ist.

4. Polyurethanweichschaumstoff nach Anspruch 2 oder 3, **dadurch gekennzeichnet, dass** die Komponente b) zu größer 5 Ges.-%, bezogen auf das Gesamtgewicht der Komponente b), polymermodifiziertes Polyol enthält.

5. Polyurethanweichschaumstoff nach Anspruch 1 bis 4, **dadurch gekennzeichnet, dass** der hyperverzweigte Polyester c1) und das hyperverzweigte Polycarbonat c2) einen mittleren Verzweigungsgrad von jeweils 10 bis 100% aufweisen.

6. Polyurothanweichschaumstoff nach Anspruch 1 bis 5, **dadurch gekennzeichnet, dass** der Anteil des hyperverzweigten Polyesters c1) und des hyperverzweigten Polycarbonats c2) zusammen 0,01 bis 50 Ges.-%, bezogen auf das Gesamtgewicht der Komponenten a) bis g), beträgt.

7. Polyurethanweichschaumstoff nach Anspruch 1 bis 6, **dadurch gekennzeichnet, dass** der hyperverzweigte Polyester c1) und das hyperverzweigte Polycarbonat c2) eine OH-Zahl von jeweils 0 bis 600 mg KOH/g aufweisen.

8. Polyurethanweichschaumstoff nach Anspruch 1 bis 7, **dadurch gekennzeichnet, dass** der hyperverzweigte Polyester c1) ein Zahlenmittel des Molekulargewichts Mₙ von 100 bis 15000 g/mol aufweist.

9. Polyurethanweichschaumstoff nach Anspruch 1 bis 8, **dadurch gekennzeichnet, dass** der hyperverzweigte Polyester c1) eine COOH-Zahl gemäß DIN 53240 von 0 bis 600 mg KOH/g Polyester aufweist.

10. Polyurethanweichschaumstoff nach Anspruch 1 bis 9, **dadurch gekennzeichnet, dass** der hyperverzweigte Polyester c1) erhältlich ist, indem man
a) eine oder mehrere Dicarbonsäuren oder ein oder mehrere Derivate derselben mit einem oder mehreren mindestens trifunktionellen Alkoholen
oder
b) eine oder mehrere Tricarbonsäuren oder höhere Polycarbonsäuren oder ein oder mehrere Derivate derselben mit einem oder mehreren Diolen,
jeweils gegebenenfalls in Gegenwart eines Lösemittels und optional in Gegenwart eines sauren anorganischen, metallorganischen oder organischen Katalysators oder eines Enzyms, umsetzt.

11. Polyurethanweichschaumstoff nach Anspruch 1 bis 10, **dadurch gekennzeichnet, dass** das hyperverzweigte Polycarbonat c2) erhältlich ist durch ein Verfahren, welches mindestens die folgenden Schritte umfasst:
aa) Umsetzung mindestens eines organischen Carbonats (A) der allgemeinen Formel R[O(CO)]ₙOR mit mindestens einem aliphatischen, aliphatisch/aromatisch oder aromatischen Alkohol (B), welcher mindestens 3 OH-Gruppen aufweist, unter Eliminierung von Alkoholen ROH zu einem oder mehreren Kondensationsprodukten (K), wobei es sich bei R jeweils unabhängig voreinander um einen geradkettigen oder verzweigten aliphatischen, aromatisch/aliphatischen oder aromatischen Kohlenwasserstoffrest mit 1 bis 20 C-Atomen handelt und wobei die Reste R auch unter Bildung eines Ringes miteinander verbunden sein können, und n eine ganze Zahl zwischen 1 und 5 darstellt, oder
ab) Umsetzung von Phosgen, Diphosgen oder Triphosgen mit o.g. Alkohol (B) unter Chlorwasserstoffeliminierung
sowie
b) intermolekulare Umsetzung der Kondensationsprodukte (K) zu einem hyperverzweigten Polycarbonat c2),
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

12. Polyurethanweichschaumstoff nach Anspruch 11, **dadurch gekennzeichnet, dass** das Reaktionsgemisch nach Anspruch 11 zusätzlich mindestens einen zwei OH-Gruppen aufweisenden Alkohol (B') umfasst, mit der Maßgabe, dass die mittlere OH-Funktionalität aller zur Herstellung des hyperverzweigten Polycarbonats c2) eingesetzten Alkohole zusammen größer als 2 ist.

13. Polyurethanweichschaumstoff nach Anspruch 10 bis 12, **dadurch gekennzeichnet, dass** man den erhaltenen hyperverzweigten Polyester c1) und/oder das er haltene hyperverzweigte Polycarbonat in einem zusätzlichen Verfahrensschritt c mit einem geeigneten Funktionalisierungsreagenz, welches mit den OH-, Carboxyl- und/oder Carbonat-Gruppen des Polyesters und/oder Polycarbonates reagieren kann, umsetzt.

14. Polyurethanweichschaumstoff nach Anspruch 10 bis 12, **dadurch gekennzeichnet, dass** man den erhaltenen hyperverzweigten Polyester c1) oder das erhaltene hyperverzweigte Polycarbonat c2) in einem zusätzlichen Verfahrensschritt mit einem geeigneten Funktionalisierungsreagenz, welches neben OH-Gruppen, Carboxylgruppen oder Carbonatgruppen noch weitere funktionale Gruppen oder funktionale Elemente aufweist und mit den OH- und/oder Carboxyl- oder Carbonat-Gruppen oder Carbamoylgruppen des Polyesters c1) oder des Polycarbonates c2) reagieren kann, umsetzt.

15. Polyurethanweichschaumstoff nach Anspruch 1 bis 14, **dadurch gekennzeichnet, dass** der hyperverzweigte Polyester c1) und / oder das hyperverzweigte Polycarbonat c2) vor der Herstellung des Polyurethanweichschaumstoffs ganz oder teilweise mit Isocyanat a) zum lsocyanatprepolymer umgesetzt wird.

16. Verfahren zur Herstellung von Polyurethanweichschaumstoffen bei dem man
a) Polyisocyanat mit
b) mindestens einem Polyetheralkohol und/oder Polyesteralkohol mit einer Funktionalität von 2 bis 8 und einem mittleren Äquivalentmolekulargewicht von 400 bis 3000 g/mol und/oder polymermodifiziertem Polyol,
c) hyperverzweigtem Polyester c1) des Typs AₓB_{y} mit x mindestens 1,1 und y mindestens 2,1 und/oder hyperverzweigtem Polycarbonat c2)
d) gegebenenfalls niedermolekularem Kettenverlängerungsmittel und/oder Vernetzungsmittel mit einem Molekulargewicht von kleiner 400 g/mol, wobei Kettenverlängerungsmittel 2 gegenüber Isocyanat reaktive Wasserstoffatome und Vernetzungsmittel 3 gegenüber Isocyanat reaktive Wasserstoffatome aufweisen,
e) Katalysator
f) Treibmittel und
g) gegebenenfalls sonstigen Zusatzstoffen
vermischt und zum Polyurethanweichschaumstoff umsetzt, wobei der Anteil der Komponente c) 0,01 bis 80 Gew.-%, bezogen auf das Gesamtgewicht der Komponenten a) bis g), beträgt.

17. Verwendung von Polyurethanweichschaumstoffen nach Anspruch 1 bis 15 zur Herstellung von Möbeln, Matratzen, Kissen, orthopädischen Produkten, Autositzen, Kopfstützen, Armlehnen sowie Autoteppichen.

## Claims

1. A flexible polyurethane foam obtainable by mixing
a) polyisocyanate with
b) at least one polyether alcohol and/or polyester alcohol having a functionality of from 2 to 8 and a mean equivalent molecular weight of from 400 to 3000 g/mol and/or polymer-modified polyol,
c) a hyperbranched polyester c1) of the AₓB_{y} type, where x is at least 1.1 and y is at least 2.1, and/or
hyperbranched polycarbonate c2)
d) if appropriate, low molecular weight chain extender and/or crosslinker with a molecular weight of less than 400 g/mol, chain extender having 2 isocyante-reactive hydrogen atoms and crosslinker having 3 isocyanate-reactive hydrogen atoms,
e) catalyst
f) blowing agent and
g) if appropriate other additives,
the proportion of component c) being 0.01 to 80% by weight, based on the total weight of the components a) to g).

2. The flexible polyurethane foam according to claim 1, wherein the component b) comprises a polymer-modified polyol.

3. The flexible polyurethane foam according to claim 2, wherein the polymer-modified polyol is a graft polyetherol or a graft polyesterol having a content of thermoplastic polymer of from 5 to 60% by weight, based on the total weight of the polymer-modified polyol.

4. The flexible polyurethane foam according to claim 2 or 3, wherein the component b) comprises more than 5% by weight, based on the total weight of the component b), of polymer-modified polyol.

5. The flexible polyurethane foam according to any of claims 1 to 4, wherein the hyperbranched polyester c1) and the hyperbranched polycarbonate c2) each have a mean degree of branching of from 10 to 100%.

6. The flexible polyurethane foam according to any of claims 1 to 5, wherein the proportion of the hyperbranched polyester c1) and the hyperbranched polycarbonate c2) together is from 0.01 to 50% by weight, based on the total weight of the components a) to g).

7. The flexible polyurethane foam according to any of claims 1 to 6, wherein the hyperbranched polyester c1) and the hyperbranched polycarbonate c2) each have an OH number of from 0 to 600 mg KOH/g.

8. The flexible polyurethane foam according to any of claims 1 to 7, wherein the hyperbranched polyester c1) has a number average molecular weight Mₙ of from 100 to 15 000 g/mol.

9. The flexible polyurethane foam according to any of claims 1 to 8, wherein the hyperbranched polyester c1) has a COOH number in accordance with DIN 53240 of from 0 to 600 mg KOH/g of polyester.

10. The flexible polyurethane foam according to any of claims 1 to 9, wherein the hyperbranched polyester c1) can be obtained by
a) reacting one or more dicarboxylic acids or one or more derivatives thereof with one or more at least trifunctional alcohols
or
b) reacting one or more tricarboxylic acids or higher polycarboxylic acids or one or more derivatives thereof with one or more diols,
in each case if appropriate in the presence of a solvent and optionally in the presence of an inorganic, metal-organic or organic acid catalyst or an enzyme.

11. The flexible polyurethane foam according to any of claims 1 to 10, wherein the hyperbranched polycarbonate c2) can be obtained by a process which comprises at least the following steps:
aa) reaction of at least one organic carbonate (A) of the general formula R[O(CO)]ₙOR with at least one aliphatic, aliphatic/aromatic or aromatic alcohol (B) which has at least 3 OH groups with elimination of alcohols ROH to form one or more condensation products (K), where the radicals R are each, independently of one another, a straight-chain or branched aliphatic, aromatic/aliphatic or aromatic hydrocarbon radical having from 1 to 20 carbon atoms and the radicals R can also be joined to one another to form a ring and n is an integer from 1 to 5, or
ab) reaction of phosgene, diphosgene or triphosgene with the abovementioned alcohol (B) with elimination of hydrogen chloride,
and
b) intermolecular reaction of the condensation products (K) to form a hyperbranched polycarbonate c2),
with the ratio of the OH groups to the carbonates in the reaction mixture being selected so that the condensation products (K) on average have either one carbonate group and more than one OH group or one OH group and more than one carbonate group.

12. The flexible polyurethane foam according to claim 11, wherein the reaction mixture according to claim 11 further comprises at least one alcohol (B') having two OH groups, with the proviso that the mean OH functionality of all alcohols used for preparing the hyperbranched polycarbonate c2) together is greater than 2.

13. The flexible polyurethane foam according to any of claims 10 to 12, wherein the hyperbranched polyester c1) obtained and/or the hyperbranched polycarbonate obtained is reacted with a suitable functionalization reagent which can react with the OH, carboxyl and/or carbonate groups of the polyester and/or polycarbonate in an additional process step c.

14. The flexible polyurethane foam according to any of claims 10 to 12, wherein the hyperbranched polyester c1) obtained or the hyperbranched polycarbonate c2) obtained is reacted with a suitable functionalization reagent which has further functional groups or functional elements in addition to OH groups, carboxyl groups or carbonate groups and can react with the OH and/or carboxyl or carbonate groups or carbamoyl groups of the polyester c1) or the polycarbonate c2) in an additional process step.

15. The flexible polyurethane foam according to any of claims 1 to 14, wherein the hyperbranched polyester c1) and/or the hyperbranched polycarbonate c2) are/is reacted completely or partially with isocyanate a) to form the isocyanate prepolymer before the production of the flexible polyurethane foam.

16. A process for producing flexible polyurethane foams, wherein
a) polyisocyanate is mixed with
b) at least one polyether alcohol and/or polyester alcohol having a functionality of from 2 to 8 and a mean equivalent molecular weight of from 400 to 3000 g/mol and/or polymer-modified polyol,
c) hyperbranched polyester c1) of the AₓB_{y} type, where x is at least 1.1 and y is at least 2.1, and/or hyperbranched polycarbonate c2)
d) if appropriate, low molecular weight chain extender and/or crosslinker with a molecular weight of less than 400 g/mol, chain extender having 2 isocyanate-reactive hydrogen atoms and crosslinker having 3 isocyanate-reactive hydrogen atoms,
e) catalyst
f) blowing agent and
g) if appropriate other additives
and reacted to form the flexible polyurethane foam, the proportion of component c) being 0.01 to 80% by weight, based on the total weight of the components a) to g).

17. The use of flexible polyurethane foams according to any of claims 1 to 15 for producing furniture, mattresses, cushions, orthopedic products, car seats, headrests, armrests and automobile carpets.

## Revendications

1. Mousse souple de polyuréthane, pouvant être obtenue par mélange
a) de polyisocyanate avec
b) au moins un polyétheralcool et/ou un polyesteralcool présentant une fonctionnalité de 2 à 8 et un poids moléculaire équivalent moyen de 400 à 3000 g/mole et/ou un polyol modifié par un polymère,
c) un polyester hyperramifié c1) du type AₓB_{y}, avec x valant au moins 1,1 et y valant au moins 2,1, et/ou un polycarbonate hyperramifié c2)
d) le cas échéant un agent d'allongement de chaîne et/ou un réticulant de bas poids moléculaire présentant un poids moléculaire inférieur à 400 g/mole, où l'agent d'allongement de chaîne présente 2 atomes d'hydrogène réactifs par rapport à isocyanate et le réticulant présente 3 atomes d'hydrogène réactifs par rapport à isocyanate,
e) un catalyseur
f) un agent gonflant et
g) le cas échéant d'autres additifs,
où la proportion du composant c) est de 0,01 à 80% en poids, par rapport au poids total des composants a) à g).

2. Mousse souple de polyuréthane selon la revendication 1, **caractérisée en ce que** le composant b) comprend un polyol modifié par un polymère.

3. Mousse souple de polyuréthane selon la revendication 2, **caractérisée en ce que** le polyol modifié par un polymère est un polyétherol greffé ou un polyesterol greffé présentant une teneur en polymères thermoplastiques de 5 à 60% en poids, par rapport au poids total du polyol modifié par un polymère.

4. Mousse souple de polyuréthane selon la revendication 2 ou 3, **caractérisée en ce que** le composant b) contient à raison de plus de 5% en poids, par rapport au poids total du composant b), de polyol modifié par un polymère.

5. Mousse souple de polyuréthane selon la revendication 1 à 4, **caractérisée en ce que** le polyester hyperramifié c1) et le polycarbonate hyperramifié c2) présentent un degré de ramification moyen à chaque fois de 10 à 100%.

6. Mousse souple de polyuréthane selon la revendication 1 à 5, **caractérisée en ce que** la proportion du polyester hyperramifié c1) et du polycarbonate hyperramifié c2) ensemble est de 0,01 à 50% en poids, par rapport au poids total des composants a) à g).

7. Mousse souple de polyuréthane selon la revendication 1 à 6, **caractérisée en ce que** le polyester hyperramifié c1) et le polycarbonate hyperramifié c2) présentent un indice OH à chaque fois de 0 à 600 mg de KOH/g.

8. Mousse souple de polyuréthane selon la revendication 1 à 7, **caractérisée en ce que** le polyester hyperramifié c1) présente une moyenne numérique du poids moléculaire Mₙ de 100 à 15 000 g/mole.

9. Mousse souple de polyuréthane selon la revendication 1 à 8, **caractérisée en ce que** le polyester hyperramifié c1) présente un indice COOH selon la norme DIN 53240 de 0 à 600 mg de KOH/g de polyester.

10. Mousse souple de polyuréthane selon la revendication 1 à 9, **caractérisée en ce que** le polyester hyperramifié c1) peut être obtenu **en ce qu'**on transforme
a) un ou plusieurs acides dicarboxyliques ou un ou plusieurs dérivés de ceux-ci avec un ou plusieurs alcools au moins trifonctionnels ou
b) un ou plusieurs acides tricarboxyliques ou acides polycarboxyliques supérieurs ou un ou plusieurs dérivés de ceux-ci avec un ou plusieurs diols
à chaque fois le cas échéant en présence d'un solvant et éventuellement en présence d'un catalyseur acide inorganique, métallo-organique ou organique ou d'une enzyme.

11. Mousse souple de polyuréthane selon la revendication 1 à 10, **caractérisée en ce que** le polycarbonate hyperramifié c2) peut être obtenu par un procédé qui comprend au moins les étapes suivantes :
aa) transformation d'au moins un carbonate organique (A) de formule générale R[O(CO)]ₙOR avec au moins un alcool aliphatique, aliphatique/aromatique ou aromatique (B), qui présente au moins 3 groupes OH, avec élimination d'alcools ROH en un ou plusieurs produits de condensation (K), où il s'agit pour R, à chaque fois indépendamment l'un de l'autre, d'un radical hydrocarboné linéaire ou ramifié, aliphatique, aromatique/aliphatique ou aromatique présentant 1 à 20 atomes de carbone et où les radicaux R peuvent également être liés l'un à l'autre avec formation d'un cycle et n représente un nombre entier entre 1 et 5
ab) transformation de phosgène, de diphosgène ou de triphosgène avec l'alcool (B) susmentionné avec élimination de gaz chlorhydrique et
b) transformation intermoléculaire des produits de condensation (K) en un polycarbonate hyperramifié c2),
le rapport des quantités de groupes OH aux carbonates dans le mélange réactionnel étant choisi de manière telle que les produits de condensation (K) présentent, en moyenne, soit un groupe carbonate et plus d'un groupe OH, soit un groupe OH et plus d'un groupe carbonate.

12. Mousse souple de polyuréthane selon la revendication 11, **caractérisée en ce que** le mélange réactionnel selon la revendication 11 comprend en outre au moins un alcool présentant deux groupes OH (B'), à condition que la fonctionnalité OH moyenne de tous les alcools utilisés pour la préparation du polycarbonate hyperramifié c2) ensemble est supérieure à 2.

13. Mousse souple de polyuréthane selon la revendication 10 à 12, **caractérisée en ce qu'**on transforme le polyester hyperramifié c1) obtenu et/ou le polycarbonate hyperramifié obtenu dans une étape de procédé supplémentaire c avec un réactif de fonctionnalisation approprié, qui peut réagir avec les groupes OH, carboxyle et/ou carbonate du polyester et/ou du polycarbonate.

14. Mousse souple de polyuréthane selon la revendication 10 à 12, **caractérisée en ce qu'**on transforme le polyester hyperramifié c1) obtenu ou le polycarbonate hyperramifié c2) obtenu dans une étape de procédé supplémentaire avec un réactif de fonctionnalisation approprié qui présente, outre des groupes OH, des groupes carboxyle ou des groupes carbonate encore d'autres groupes fonctionnels ou éléments fonctionnels et qui peut réagir avec les groupes OH et/ou carboxyle ou carbonate ou carbamoyle du polyester c1) ou du polycarbonate c2).

15. Mousse souple de polyuréthane selon la revendication 1 à 14, **caractérisée en ce que** le polyester hyperramifié c1) et/ou le polycarbonate hyperramifié c2) est transformé avant la préparation de la mousse souple de polyuréthane, totalement ou partiellement avec l'isocyanate a) en prépolymère d'isocyanate.

16. Procédé pour la préparation de mousses souples de polyuréthane, dans lequel on mélange
a) du polyisocyanate avec
b) au moins un polyétheralcool et/ou un polyesteralcool présentant une fonctionnalité de 2 à 8 et un poids moléculaire équivalent moyen de 400 à 3000 g/mole et/ou un polyol modifié par un polymère,
c) un polyester hyperramifié c1) du type AₓB_{y}, avec x valant au moins 1,1 et y valant au moins 2,1, et/ou un polycarbonate hyperramifié c2)
d) le cas échéant un agent d'allongement de chaîne et/ou un réticulant de bas poids moléculaire présentant un poids moléculaire inférieur à 400 g/mole, où l'agent d'allongement de chaîne présente 2 atomes d'hydrogène réactifs par rapport à isocyanate et le réticulant présente 3 atomes d'hydrogène réactifs par rapport à isocyanate,
e) un catalyseur
f) un agent gonflant et
g) le cas échéant d'autres additifs,
et on transforme le mélange en mousse souple de polyuréthane, où la proportion du composant c) est de 0,01 à 80% en poids, par rapport au poids total des composants a) à g).

17. Utilisation de mousses souples de polyuréthane selon la revendication 1 à 15 pour la fabrication de meubles, matelas, coussins, produits orthopédiques, sièges pour voitures, appuies-têtes, accoudoirs ainsi que tapis de voitures.
